# EUROPEAN PATENT APPLICATION

(11) **EP 3 614 581 A1**
(43) Date of publication of application: **26.02.2020**
(21) Application number: 18787768.3
(22) Date of filing: 03.04.2018
(51) Int. Cl.: H04B 10/297, H04B 10/294, H04J 14/02

(54) **BIDIRECTIONAL OPTICAL TRANSMISSION SYSTEM AND BIDIRECTIONAL OPTICAL TRANSMISSION METHOD**

(30) Priority: 18.04.2017 JP 2017082077
(71) Applicant: NEC Corporation, Tokyo 108-8001 (JP)
(72) Inventor: NAKAMURA Kohei, Tokyo 108-8001 (JP)
(74) Representative: Betten & Resch
(86) International application number: PCT/JP2018/014272
(87) International publication number: WO 2018/193835

(57) **Abstract**

A bidirectional optical transmission system includes a first optical transmission line including a first repeater (30A), a second optical transmission line including a second repeater (30B), and C+L band transmitting/receiving devices (10, 20) connected to each other through these transmission lines so that they can communicate with each other. The C+L band transmitting/receiving device (10) transmits an optical signal in a C-band to the first optical transmission line and transmits an optical signal in an L-band to the second optical transmission line, and the C+L band transmitting/receiving device (20) transmits an optical signal in the C-band to the second optical transmission line and transmits an optical signal in the L-band to the first optical transmission line. The first repeater (30A) separates the optical signal in the C-band and the optical signal in the L-band bidirectionally propagating through the first optical transmission line from each other, and separately amplifies the separated optical signals, and the second repeater (30B) separates the optical signal in the C-band and the optical signal in the L-band bidirectionally propagating through the second optical transmission line from each other, and separately amplifies the separated optical signals. In this way, it is possible to expand a transmission capacity and alleviate deterioration in a transmission characteristic.

## Description

### Technical Field

The present invention relates to a bidirectional optical transmission system and a bidirectional optical transmission method.

### Background Art

Because of the recent increase in communication traffic, it has been desired to realize a large-capacity optical transmission system. For example, in an optical submarine transmission system, large-capacity transmission is realized by using a method for increasing the number of wavelengths by reducing intervals between signal bands, or a method for increasing a transmission capacity at each wave by increasing its bit rate. However, the large-capacity transmission using these methods seems to have already been saturated. Therefore, it has been desired to further expand the transmission capacity.

At the present, optical signals are transmitted by using a C-band (a Conventional band) in an optical transmission system. However, use of an L-band (a Long wavelength band) in addition to the C-band has been studied in order to expand the transmission capacity in the future. The C-band is a band around 1550 nm and the L-band is a band around 1580 nm.

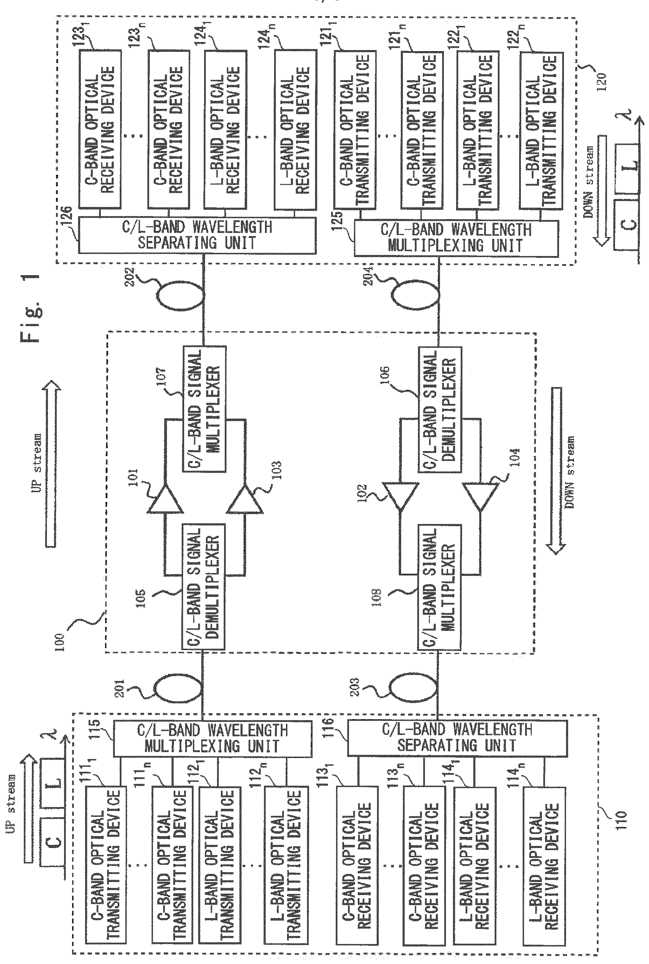

Fig. 1 shows a configuration of an optical transmission system using a C+L band. This optical transmission system includes a C+L band repeater 100, C+L band transmitting/receiving devices 110 and 120, and optical fibers 201 to 204.

The C+L band repeater 100 includes C-band repeaters 101 and 102, L-band repeaters 103 and 104, C/L band signal demultiplexers 105 and 106, and C/L band signal multiplexers 107 and 108. The C/L band signal demultiplexers 106 and 105 have the same structure as each other, and each of them has an input port and first and second output ports. The C/L band signal multiplexers 107 and 108 have the same structure as each other, and each of them has first and second input ports and an output port.

The input port of the C/L band signal demultiplexer 105 is optically coupled to the optical fiber 201. The input port of the C/L band signal demultiplexer 106 is optically coupled to the optical fiber 204. The output port of the C/L band signal multiplexer 107 is optically coupled to the optical fiber 202. The output port of the C/L band signal multiplexer 108 is optically coupled to the optical fiber 203. Note that "optically coupled" means that optical signals propagate through a coupling part without causing substantial losses.

The first and second output ports of the C/L band signal demultiplexer 105 are optically coupled to the first and second input ports, respectively, of the C/L band signal demultiplexer 107 through optical transmission lines. The C-band repeater 101 is disposed in the optical transmission line between the first output port and the first input port. The L-band repeater 103 is disposed in the optical transmission line between the second output port and the second input port.

The first and second output ports of the C/L band signal demultiplexer 106 are optically coupled to the first and second input ports, respectively, of the C/L band signal demultiplexer 108 through optical transmission lines. The C-band repeater 102 is disposed in the optical transmission line between the first output port and the first input port. The L-band repeater 104 is disposed in the optical transmission line between the second output port and the second input port.

The C+L band transmitting/receiving device 110 includes C-band optical transmitting devices 111₁ to 111ₙ, L-band optical transmitting devices 112₁ to 112ₙ, C-band optical receiving devices 113₁ to 113ₙ, L-band optical receiving devices 114₁ to 114n, a C/L band wavelength multiplexing unit 115, and a C/L band wavelength separating unit 116. The C+L band transmitting/receiving device 120 includes C-band optical transmitting devices 121₁ to 121ₙ, L-band optical transmitting devices 122₁ to 122ₙ, C-band optical receiving devices 123₁ to 123ₙ, L-band optical receiving devices 124₁ to 124ₙ, a C/L band wavelength multiplexing unit 115, and a C/L band wavelength separating unit 126.

The C-band optical transmitting devices 111₁ to 111ₙ output optical signals having mutually different wavelengths in the C-band. The L-band optical transmitting devices 112₁ to 112ₙ output optical signals having mutually different wavelengths in the L-band. The C/L band wavelength multiplexing unit 115 multiplexes the optical signals in the C-band output from the C-band optical transmitting devices 111₁ to 111ₙ and the optical signals in the L-band output from the L-band optical transmitting devices 112₁ to 112ₙ, and outputs a wavelength-multiplexed optical signal in a C+L band. The wavelength-multiplexed optical signal in the C+L band output from the C/L band wavelength multiplexing unit 115 is supplied to the C/L band signal demultiplexer 105 through the optical fiber 201.

The C/L band signal demultiplexer 105 separates the wavelength-multiplexed optical signal in the C+L band into a wavelength-multiplexed optical signal in the C-band and a wavelength-multiplexed optical signal in the L-band. The wavelength-multiplexed optical signal in the C-band is amplified by the C-band repeater 101 and then supplied to the first input port of the C/L band signal multiplexer 107. The wavelength-multiplexed optical signal in the L-band is amplified by the L-band repeater 103 and then supplied to the second input port of the C/L band signal multiplexer 107. The C/L band signal multiplexer 107 multiplexes the optical signal in the C-band and the optical signal in the L-band. The C/L band signal multiplexer 107 outputs a wavelength-multiplexed optical signal in the C+L band. The wavelength-multiplexed optical signal in the C+L band output from the C/L band signal multiplexer 107 is supplied to the C/L band wavelength separating unit 126 through the optical fiber 202.

The C/L band wavelength separating unit 126 separates the wavelength-multiplexed optical signal in the C+L band according to the wavelength. The C/L band wavelength separating unit 126 supplies the optical signals in the respective wavelengths in the C-band to the C-band optical receiving devices 123₁ to 123ₙ. The C/L band wavelength separating unit 126 supplies the optical signals in the respective wavelengths in the L-band to the L-band optical receiving devices 124₁ to 124ₙ.

The C-band optical transmitting devices 121₁ to 121ₙ output optical signals having mutually different wavelengths in the C-band. The L-band optical transmitting devices 122₁ to 122ₙ output optical signals having mutually different wavelengths in the L-band. The C/L band wavelength multiplexing unit 125 multiplexes the wavelength-multiplexed optical signals in the C-band output from the C-band optical transmitting devices 1211 to 121ₙ and the wavelength-multiplexed optical signals in the L-band output from the L-band optical transmitting devices 122₁ to 122ₙ, and outputs a wavelength-multiplexed optical signal in the C+L band. The wavelength-multiplexed optical signal in the C+L band output from the C/L band wavelength multiplexing unit 125 is supplied to the C/L band signal demultiplexer 106 through the optical fiber 204.

The C/L band signal demultiplexer 106 separates the wavelength-multiplexed optical signal in the C+L band into a wavelength-multiplexed optical signal in the C-band and a wavelength-multiplexed optical signal in the L-band. The wavelength-multiplexed optical signal in the C-band is amplified by the C-band repeater 102 and then supplied to the first input port of the C/L band signal multiplexer 108. The wavelength-multiplexed optical signal in the L-band is amplified by the L-band repeater 104 and then supplied to the second input port of the C/L band signal multiplexer 108. The C/L band signal multiplexer 108 multiplexes the wavelength-multiplexed optical signal in the C-band and the wavelength-multiplexed optical signal in the L-band. The C/L band signal multiplexer 108 outputs a wavelength-multiplexed optical signal in the C+L band. The wavelength-multiplexed optical signal in the C+L band output from the C/L band signal multiplexer 108 is supplied to the C/L band wavelength separating unit 116 through the optical fiber 203.

The C/L band wavelength separating unit 116 separates the wavelength-multiplexed optical signal in the C+L band according to the wavelength. The C/L band wavelength separating unit 116 supplies the optical signals in the respective wavelengths in the C-band to the C-band optical receiving devices 113₁ to 113ₙ. The C/L band wavelength separating unit 116 supplies the optical signals in the respective wavelengths in the L-band to the L-band optical receiving devices 114₁ to 114ₙ.

In the above-described optical transmission system using the C+L band, the transmission line formed by the optical fibers 201 and 202, the C-band repeater 101, the L-band repeater 103, the C/L band signal demultiplexer 105, and the L-band signal multiplexer 107 is a transmission line for upstream transmission. Meanwhile, the transmission line formed by the optical fibers 203 and 204, the C-band repeater 102, the L-band repeater 104, the C/L band signal demultiplexer 106, and the L-band signal multiplexer 108 is a transmission line for downstream transmission. The C+L band transmitting/receiving device 110 can transmit an optical signal in the C-band and an optical signal in the L-band by using the upstream transmission line. Further, the C+L band transmitting/receiving device 120 can transmit an optical signal in the C-band and an optical signal in the L-band by using the downstream transmission line. As described above, since the optical transmission system using the C+L band can transmit optical signals in the C+L band in both directions, it is possible to increase the transmission capacity in comparison to that in the optical transmission system that transmits/receives optical signals by using only the C-band.

As another optical transmission system, Patent Literature 1 discloses a bidirectional WDM (Wavelength Division Multiplexing) optical transmission system that performs bidirectional WDM optical transmission by using one optical transmission line. This bidirectional WDM optical transmission system includes a first WDM optical transmitter/receiver and a second WDM optical transmitter/receiver. The first WDM optical transmitter/receiver receives an optical signal in a C-band (a band at 1580 nm) and transmits an optical signal in an L-band (a band at 1550 nm). The second WDM optical transmitter/receiver receives an optical signal in the L-band and transmits an optical signal in the C-band.

In this bidirectional WDM optical transmission system, an optical signal in the L-band is transmitted from the first WDM optical transmitter/receiver to the second WDM optical transmitter/receiver and an optical signal in the C-band is transmitted from the second WDM optical transmitter/receiver to the first WDM optical transmitter/receiver.

As yet another optical transmission system, Patent Literature 2 discloses a single-fiber bidirectional optical wavelength multiplexing transmission system that transmits/receives an upstream wavelength-multiplexed signal and a downstream wavelength-multiplexed signal by using a single optical transmission line. The band of the upstream wavelength-multiplexed signal is different from that of the downstream wavelength-multiplexed signal.

### Citation List

### Patent Literature

Patent Literature 1: Japanese Unexamined Patent Application Publication No. H11-284576
Patent Literature 2: Japanese Unexamined Patent Application Publication No. 2004-7146

### Summary of Invention

### Technical Problem

However, there is the following problem in the optical transmission system shown in Fig. 1.

Each of the C-band repeaters 101 and 102 and the L-band repeaters 103 and 104 cannot achieve a satisfactory amplification characteristic when its input optical signal contains a component having an out-of-band wavelength. In order to suppress the influence of this out-of-band wavelength on the amplification characteristic, each of the C/L band signal demultiplexers 105 and 106 uses a C/L demultiplexing filter having a transmission characteristic in which a guard band (an unused band) is set at the boundary between the transmission wavelength range in the C-band and that in the L-band. In this C/L demultiplexing filter, it is necessary to set a guard band having a somewhat large width in order to cut off optical signals in the L-band on a first output port (C-band transmission port) side and cut off optical signals in the C-band on a second output port (L-band transmission port) side. However, when the guard band having a large width is set, the wavelength band of the main signal is reduced. As a result, the transmission capacity is reduced.

Further, when an optical signal in the L-band remains on the C-band transmission port side of the C/L band signal demultiplexers 105 and 106, coherent crosstalk in which the remaining optical signal in the L-band is multiplexed with other optical signals in the L-band occurs in the C/L band signal multiplexers 107 and 108. Similarly, when an optical signal in the C-band remains on the L-band transmission port side of the C/L band signal demultiplexers 105 and 106, coherent crosstalk in which the remaining optical signal in the C-band is multiplexed with other optical signals in the C-band occurs in the C/L band signal multiplexers 107 and 108. Since such coherent crosstalk affects the transmission characteristic of optical signals, the quality of received optical signals may deteriorate.

In the bidirectional WDM optical transmission system disclosed in Patent Literature 1, the bandwidth of optical signals transmitted in the upstream direction is different from that in the downstream direction. For example, the L-band is used in the upstream direction and the C-band is used in the downstream direction. In this case, even if the transmission capacity is expanded by the method for increasing the number of wavelengths by reducing intervals between signal bands or the like, the transmission capacity in the upstream direction can be expanded only within the L-band range and the transmission capacity in the downstream direction can be expanded only within the C-band range. Therefore, in consideration of the recent increase in communication traffic, it is desired to further increase the transmission capacity.

In the single-fiber bidirectional optical wavelength multiplexing transmission system disclosed in Patent Literature 2, the bandwidth of optical signals transmitted in the upstream direction is different from that in the downstream direction. Therefore, problems similar to those that occur in the system disclosed in Patent Literature 1 occur.

An object of the present invention is to provide a bidirectional optical transmission system and a bidirectional optical transmission method capable of solving the above-described problems, and thereby expanding a transmission capacity and alleviating deterioration in a transmission characteristic.

### Solution to Problem

In order to achieve the above-described object, according to an aspect of the present invention, the following bidirectional optical transmission system is provided. That is, a bidirectional optical transmission system includes:
a first optical transmission line including a first repeater;
a second optical transmission line including a second repeater; and
first and second transmitting/receiving devices connected to each other through the first and second optical transmission lines so that they can communicate with each other, each of first and second transmitting/receiving devices being configured to transmit and receive an optical signal in a first band and an optical signal in a second band different from the first band; in which
the first transmitting/receiving device transmits the optical signal in the first band to the first optical transmission line and transmits the optical signal in the second band to the second optical transmission line,
the second transmitting/receiving device transmits the optical signal in the first band to the second optical transmission line and transmits the optical signal in the second band to the first optical transmission line,
the first repeater separates the optical signal in the first band and the optical signal in the second band bidirectionally propagating through the first optical transmission line from each other, and separately amplifies the separated optical signals, and
the second repeater separates the optical signal in the first band and the optical signal in the second band bidirectionally propagating through the second optical transmission line from each other, and separately amplifies the separated optical signals.

According to another aspect of the invention, the following bidirectional optical transmission method is provided. That is, a bidirectional optical transmission method includes transmitting an optical signal in a first band and an optical signal in a second band different from the first band in both a first direction and a second direction opposite to the first direction by using a first optical transmission line including a first repeater and a second optical transmission line including a second repeater, the bidirectional optical transmission method further including:
in the first direction, transmitting the optical signal in the first band to the first optical transmission line, transmitting the optical signal in the second band to the second optical transmission line, and in the first repeater, separating the optical signal in the first band and the optical signal in the second band bidirectionally propagating through the first optical transmission line from each other and separately amplifying the separated optical signals; and
in the second direction, transmitting the optical signal in the first band to the second optical transmission line, transmitting the optical signal in the second band to the first optical transmission line, and in the second repeater, separating the optical signal in the first band and the optical signal in the second band bidirectionally propagating through the second optical transmission line from each other and separately amplifying the separated optical signals.

### Advantageous Effects of Invention

According to the present invention, it is possible to expand a transmission capacity and alleviate deterioration in a transmission characteristic.

### Brief Description of Drawings

Fig. 1 is a block diagram showing a configuration example of an optical transmission system using a C+L band;
Fig. 2 is a block diagram showing a configuration of a bidirectional optical transmission system according to a first example embodiment of the present invention;
Fig. 3A is a schematic diagram for explaining operations performed by an optical circulator of the bidirectional optical transmission system shown in Fig. 2;
Fig. 3B is a schematic diagram for explaining operations performed by another optical circulator of the bidirectional optical transmission system shown in Fig. 2;
Fig. 4A is a schematic diagram for explaining operations performed by yet another optical circulator of the bidirectional optical transmission system shown in Fig. 2;
Fig. 4B is a schematic diagram for explaining operations performed by yet another optical circulator of the bidirectional optical transmission system shown in Fig. 2;
Fig. 5A is a schematic diagram for explaining operations performed by yet another optical circulator of the bidirectional optical transmission system shown in Fig. 2;
Fig. 5B is a schematic diagram for explaining operations performed by yet another optical circulator of the bidirectional optical transmission system shown in Fig. 2;
Fig. 6A is a schematic diagram for explaining operations performed by yet another optical circulator of the bidirectional optical transmission system shown in Fig. 2;
Fig. 6B is a schematic diagram for explaining operations performed by yet another optical circulator of the bidirectional optical transmission system shown in Fig. 2;
Fig. 7 is a block diagram showing a configuration of a bidirectional optical transmission system according to a second example embodiment of the present invention; and
Fig. 8 is a block diagram showing a modified example of the bidirectional optical transmission system shown in Fig. 2.

### Description of Embodiments

Next, example embodiments according to the present invention will be described with reference to the drawings.

### (First Embodiment)

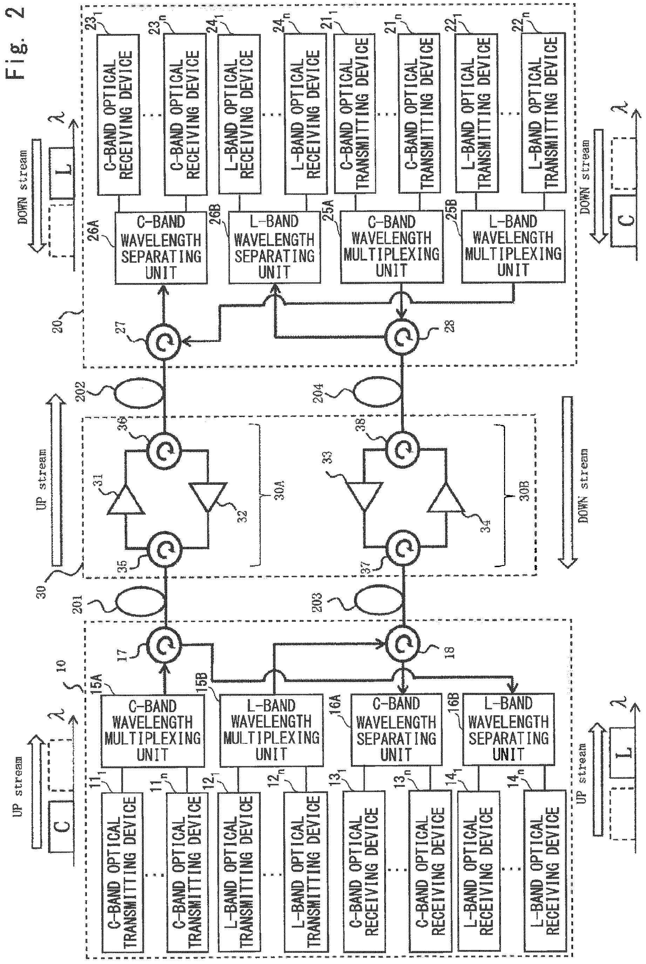

Fig. 2 is a block diagram showing a configuration of a bidirectional optical transmission system according to a first example embodiment of the present invention.

Referring to Fig. 2, the bidirectional optical transmission system includes C+L band transmitting/receiving devices 10 and 20, a C+L band repeater 30, and optical fibers 201 to 204. The C+L band transmitting/receiving device 10 is optically coupled to the C+L band repeater 30 through the optical fibers 201 and 203, and the C+L band transmitting/receiving device 20 is optically coupled to the C+L band repeater 30 through optical fibers 202 and 204.

The optical fibers 201 and 202 form a first optical transmission line, and the optical fibers 202 and 203 form a second optical transmission line. Note that the direction from the C+L band transmitting/receiving device 10 to the C+L band transmitting/receiving device 20 is referred to as an upstream direction. The direction from the C+L band transmitting/receiving device 20 to the C+L band transmitting/receiving device 10 is referred to as a downstream direction.

The C+L band transmitting/receiving device 10 transmits an optical signal in a C-band to the C+L band transmitting/receiving device 20 through the first optical transmission line, and transmits an optical signal in an L-band to the C+L band transmitting/receiving device 20 through the second optical transmission line. Meanwhile, the C+L band transmitting/receiving device 20 transmits an optical signal in the L-band to the C+L band transmitting/receiving device 10 through the first optical transmission line, and transmits an optical signal in the C-band to the C+L band transmitting/receiving device 10 through the second optical transmission line. In the first optical transmission line, the optical signal in the C-band is transmitted in the upstream direction and the optical signal in the L-band is transmitted in the downstream direction. In the second optical transmission line, the optical signal in the L-band is transmitted in the upstream direction and the optical signal in the C-band is transmitted in the downstream direction.

Configurations of the C+L band transmitting/receiving device apparatuses 10 and 20 and the C+L band repeater 30 will be described hereinafter in detail.

Firstly, a configuration of the C+L band transmitting/receiving device 10 is described in detail.

The C+L band transmitting/receiving device 10 includes C-band optical transmitting devices 11₁ to 11ₙ, L-band optical transmitting devices 12₁ to 12ₙ, C-band optical receiving devices 13₁ to 13ₙ, L-band optical receiving devices 14₁ to 14n, a C-band wavelength multiplexing unit 15A, an L-band wavelength multiplexing unit 15B, a C-band wavelength separating unit 16A, an L-band wavelength separating unit 16B, and optical circulators 17 and 18. The number "n", which indicates the number of devices, can be arbitrarily determined.

Each of the C-band wavelength multiplexing unit 15A and the L-band wavelength separating unit 16B is optically coupled to the optical fiber 201 through the optical circulator 17. Each of the L-band wavelength multiplexing unit 15B and the C-band wavelength separating unit 16A is optically coupled to the optical fiber 203 through the optical circulator 18.

Existing optical circulators such as polarization-dependent optical circulators and polarization-independent optical circulators can be used as the optical circulators 17 and 18. The polarization-dependent optical circulator includes, for example, a Faraday rotator, two polarizers that are arranged at a relative angle of 45° so as to sandwich the Faraday rotator from both sides thereof, and a magnet covering the circumference of the Faraday rotator. The polarization-independent optical circulator includes, for example, a Faraday rotator, a 1/2-wavelength plate, a polarizing beam splitter, a reflection mirror, and so on. Since these optical circulators are well known, only their operations are described hereinafter while omitting descriptions of their structures.

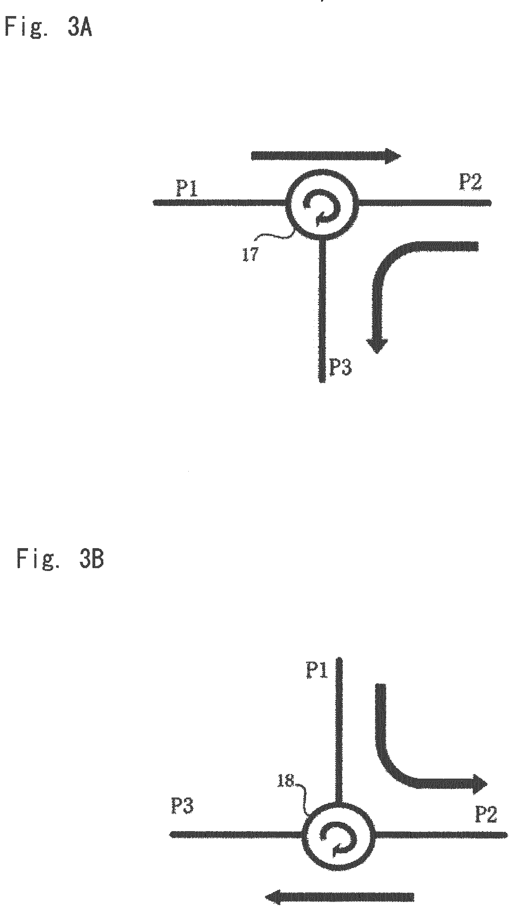

Fig. 3A schematically shows an image representing operations performed by the optical circulator 17. As shown in Fig. 3A, the optical circulator 17 includes three ports PI to P3. In the optical circulator 17, an optical signal input from the port PI is output from the port P2. Further, an optical signal input from the port P2 is output from the port P3.

The port P1 of the optical circulator 17 is optically coupled to the output port of the C-band wavelength multiplexing unit 15A. The port P2 of the optical circulator 17 is optically coupled to one end of the optical fiber 201. The port P3 of the optical circulator 17 is optically coupled to the input port of the L-band wavelength separating unit 16B.

Fig. 3B schematically shows an image representing operations performed by the optical circulator 18. As shown in Fig. 3B, similarly to the optical circulator 17, the optical circulator 18 also includes three ports PI to P3. In the optical circulator 18, an optical signal input from the port P1 is output from the port P2. Further, an optical signal input from the port P2 is output from the port P3.

The port P1 of the optical circulator 18 is optically coupled to the output port of the L-band wavelength multiplexing unit 15B. The port P2 of the optical circulator 18 is optically coupled to one end of the optical fiber 203. The port P3 of the optical circulator 18 is optically coupled to the input port of the C-band wavelength separating unit 16A.

The C-band optical transmitting devices 11₁ to 11ₙ output optical signals having mutually different wavelengths in the C-band. The C-band wavelength multiplexing unit 15A multiplexes the optical signals having the respective wavelengths output from the C-band optical transmitting devices 11₁ to 11ₙ, and outputs a wavelength-multiplexed optical signal in the C-band. The wavelength-multiplexed signal in the C-band is supplied to the optical fiber 201 through the optical circulator 17.

The L-band optical transmitting devices 12₁ to 12ₙ output optical signals having mutually different wavelengths in the L-band. The L-band wavelength multiplexing unit 15B multiplexes the optical signals having the respective wavelengths output from the L-band optical transmitting devices 12₁ to 12ₙ, and outputs a wavelength-multiplexed optical signal in the L-band. The wavelength-multiplexed signal in the L-band is supplied to the optical fiber 203 through the optical circulator 18.

The C-band wavelength separating unit 16A receives the wavelength-multiplexed optical signal in the C-band from the optical fiber 203 through the optical circulator 18. The C-band wavelength separating unit 16A separates the received wavelength-multiplexed optical signal in the C-band according to the wavelength, and supplies the separated optical signals having the respective wavelengths to the C-band optical receiving devices 13₁ to 13ₙ.

The L-band wavelength separating unit 16B receives the wavelength-multiplexed optical signal in the L-band from the optical fiber 201 through the optical circulator 17. The L-band wavelength separating unit 16B separates the received wavelength-multiplexed optical signal in the L-band according to the wavelength, and supplies the separated optical signals having the respective wavelengths to the L-band optical receiving devices 14₁ to 14ₙ.

Next, a configuration of the C+L band transmitting/receiving device 20 is described in detail.

The C+L band transmitting/receiving device 20 includes C-band optical transmitting devices 211 to 21ₙ, L-band optical transmitting devices 22₁ to 22ₙ, C-band optical receiving devices 23₁ to 23ₙ, L-band optical receiving devices 24₁ to 24ₙ, a C-band wavelength multiplexing unit 25A, an L-band wavelength multiplexing unit 25B, a C-band wavelength separating unit 26A, an L-band wavelength separating unit 26B, and optical circulators 27 and 28. The number "n", which indicates the number of devices, can be arbitrarily determined. However, it is necessary to make the number of devices in the C+L band transmitting/receiving device 10 equal to the number of corresponding devices in the C+L band transmitting/receiving device 20.

Each of the C-band wavelength multiplexing unit 25A and the L-band wavelength separating unit 26B is optically coupled to the optical fiber 202 through the optical circulator 27. Each of the L-band wavelength multiplexing unit 25B and the C-band wavelength separating unit 26A is optically coupled to the optical fiber 204 through the optical circulator 28.

Existing optical circulators such as polarization-dependent optical circulators and polarization-independent optical circulators can be used as the optical circulators 27 and 28. Only operations performed by the optical circulators are described hereinafter while omitting descriptions of their structures.

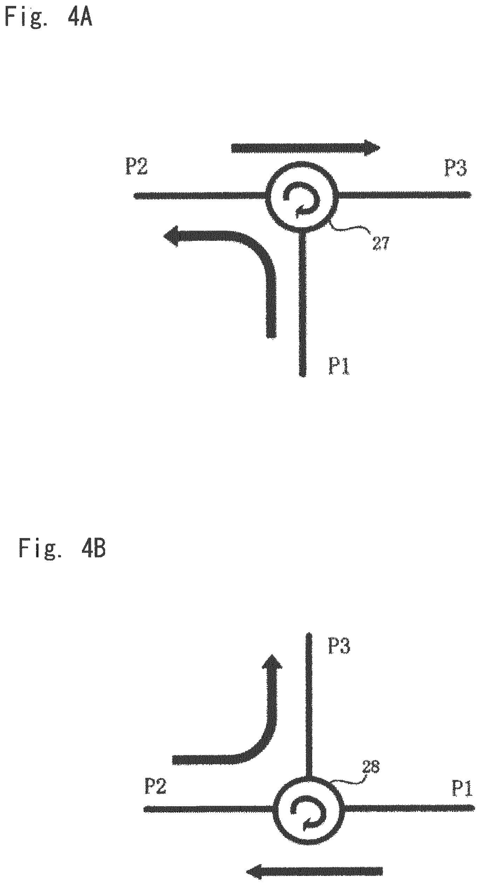

Fig. 4A schematically shows an image representing operations performed by the optical circulator 27. As shown in Fig. 4A, the optical circulator 27 also includes three ports P1 to P3. In the optical circulator 27, an optical signal input from the port P1 is output from the port P2. Further, an optical signal input from the port P2 is output from the port P3.

The port P1 of the optical circulator 27 is optically coupled to the output port of the L-band wavelength multiplexing unit 25B. The port P2 of the optical circulator 27 is optically coupled to the optical fiber 201. The port P3 of the optical circulator 27 is optically coupled to the input port of the C-band wavelength separating unit 26A.

Fig. 4B schematically shows an image representing operations performed by the optical circulator 28. As shown in Fig. 4B, the optical circulator 28 also includes three ports P1 to P3. In the optical circulator 28, an optical signal input from the port P1 is output from the port P2. Further, an optical signal input from the port P2 is output from the port P3.

The port P1 of the optical circulator 18 is optically coupled to the output port of the C-band wavelength multiplexing unit 25A. The port P2 of the optical circulator 28 is optically coupled to the optical fiber 204. The port P3 of the optical circulator 28 is optically coupled to the input port of the L-band wavelength separating unit 26B.

The C-band optical transmitting devices 21₁ to 21ₙ output optical signals having mutually different wavelengths in the C-band. The C-band wavelength multiplexing unit 25A multiplexes the optical signals having the respective wavelengths output from the C-band optical transmitting devices 21₁ to 21ₙ, and outputs a wavelength-multiplexed optical signal in the C-band. The wavelength-multiplexed signal in the C-band is supplied to the optical fiber 204 through the optical circulator 28.

The L-band optical transmitting devices 22₁ to 22ₙ output optical signals having mutually different wavelengths in the L-band. The L-band wavelength multiplexing unit 25B multiplexes the optical signals having the respective wavelengths output from the L-band optical transmitting devices 22₁ to 22ₙ, and outputs a wavelength-multiplexed optical signal in the L-band. The wavelength-multiplexed signal in the L-band is supplied to the optical fiber 202 through the optical circulator 27.

The C-band wavelength separating unit 26A receives the wavelength-multiplexed optical signal in the C-band from the optical fiber 202 through the optical circulator 27. The C-band wavelength separating unit 26A separates the received wavelength-multiplexed optical signal in the C-band according to the wavelength, and supplies the separated optical signals having the respective wavelengths to the C-band optical receiving devices 23₁ to 23ₙ.

The L-band wavelength separating unit 26B receives the wavelength-multiplexed optical signal in the L-band from the optical fiber 204 through the optical circulator 28. The L-band wavelength separating unit 26B separates the received wavelength-multiplexed optical signal in the L-band according to the wavelength, and supplies the separated optical signals having the respective wavelengths to the L-band optical receiving devices 24₁ to 24ₙ.

The C+L band repeater 30 includes a first repeater unit 30A disposed between the optical fibers 201 and 202, and a second repeater unit 30B disposed between the optical fibers 203 and 204.

Next, a configuration of the C+L band repeater 30 is described in detail.

The first repeater unit 30A includes a C-band repeater 31, an L-band repeater 32, and optical circulators 35 and 36.

The C-band repeater 31 is an optical amplifier that amplifies an optical signal in the C-band. An input port of the C-band repeater 31 is optically coupled to the optical fiber 201 through the optical circulator 35. An output port of the C-band repeater 31 is optically coupled to the optical fiber 202 through the optical circulator 36. For example, an optical amplifier such as an EDFA (Erbium Doped Fiber Amplifier) may be used as the C-band repeater 31.

The L-band repeater 32 is an optical amplifier that amplifies an optical signal in the L-band. An input port of the L-band repeater 32 is optically coupled to the optical fiber 202 through the optical circulator 36. An output port of the L-band repeater 32 is optically coupled to the optical fiber 201 through the optical circulator 35. For example, an optical amplifier such as an EDFA may be used as the L-band repeater 32.

Existing optical circulators such as polarization-dependent optical circulators and polarization-independent optical circulators can be used as the optical circulators 35 and 36. Only operations performed by the optical circulators are described hereinafter while omitting descriptions of their structures.

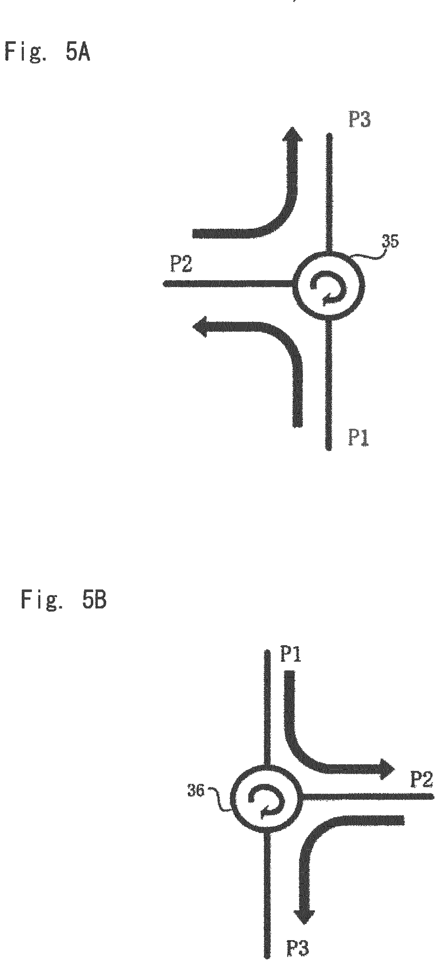

Fig. 5A schematically shows an image representing operations performed by the optical circulator 35. As shown in Fig. 5A, the optical circulator 35 includes three ports P1 to P3. In the optical circulator 35, an optical signal input from the port P1 is output from the port P2. Further, an optical signal input from the port P2 is output from the port P3.

The port PI of the optical circulator 35 is optically coupled to the output port of the L-band repeater 32. The port P2 of the optical circulator 35 is optically coupled to the optical fiber 201. The port P3 of optical circulator 35 is optically coupled to the input port of the C-band repeater 31.

Fig. 5B schematically shows an image representing operations performed by the optical circulator 36. As shown in Fig. 5B, the optical circulator 36 also includes three ports P1 to P3. In the optical circulator 36, an optical signal input from the port P1 is output from the port P2. Further, an optical signal input from the port P2 is output from the port P3.

The port P1 of the optical circulator 36 is optically coupled to the output port of the C-band repeater 31. The port P2 of the optical circulator 36 is optically coupled to the optical fiber 202. The port P3 of the optical circulator 36 is optically coupled to the input port of L-band repeater 32.

In the above-described first repeater unit 30A, a wavelength-multiplexed optical signal in the C-band output from the C-band wavelength-multiplexing unit 15A is supplied to the port P2 of the optical circulator 35. In the optical circulator 35, the wavelength-multiplexed optical signal in the C-band input from the port P2 is output from the port P3. The wavelength-multiplexed optical signal in the C-band output from the port P3 of the optical circulator 35 is amplified by the C-band repeater 31 and then supplied to the port P1 of the optical circulator 36. In the optical circulator 36, the wavelength-multiplexed optical signal in the C-band input from the port P1 is output from the port P2.

Meanwhile, the wavelength-multiplexed optical signal in the L-band output from the L-band wavelength-multiplexing unit 25B is supplied to the port P2 of the optical circulator 36. In the optical circulator 36, the wavelength-multiplexed optical signal in the L-band input from the port P2 is output from the port P3. The wavelength-multiplexed optical signal in the L-band output from the port P3 of the optical circulator 36 is amplified by the L-band repeater 32 and then supplied to the port P1 of the optical circulator 35. In the optical circulator 35, the wavelength-multiplexed optical signal in the L-band input from the port P1 is output from the port P2.

The second repeater unit 30B includes a C-band repeater 33, an L-band repeater 34, and optical circulators 37 and 38.

The C-band repeater 33 is similar to the C-band repeater 31. An input port of the C-band repeater 33 is optically coupled to the optical fiber 203 through the optical circulator 37. An output port of the C-band repeater 33 is optically coupled to the optical fiber 204 through the optical circulator 38.

The L-band repeater 34 is similar to the L-band repeater 32. An input port of the L-band repeater 34 is optically coupled to the optical fiber 204 through the optical circulator 38. An output port of the L-band repeater 34 is optically coupled to the optical fiber 203 through the optical circulator 37.

Existing optical circulators such as polarization-dependent optical circulators and polarization-independent optical circulators can be used as the optical circulators 37 and 38. Only operations performed by the optical circulators are described hereinafter while omitting descriptions of their structures.

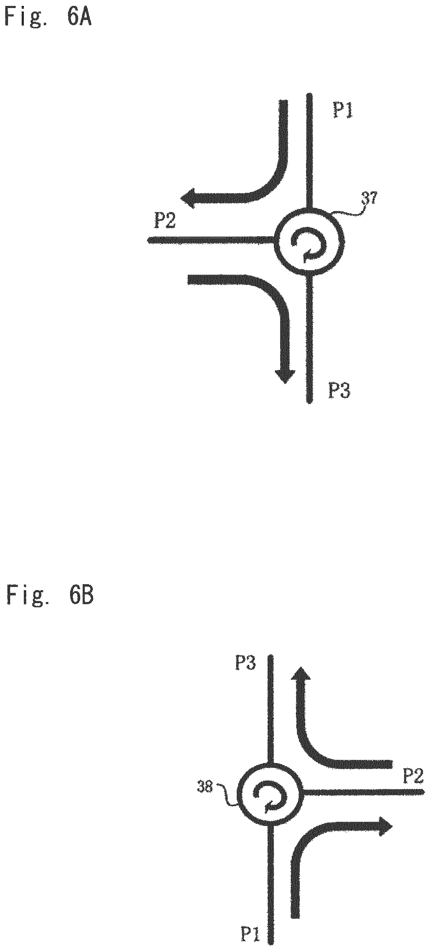

Fig. 6A schematically shows an image representing operations performed by the optical circulator 37. As shown in Fig. 6A, the optical circulator 37 includes three ports P1 to P3. In the optical circulator 37, an optical signal input from the port P1 is output from the port P2. Further, an optical signal input from the port P2 is output from the port P3.

The port P1 of the optical circulator 37 is optically coupled to the output port of the C-band repeater 33. The port P2 of the optical circulator 37 is optically coupled to the optical fiber 203. The port P3 of the optical circulator 37 is optically coupled to the input port of the L-band repeater 34.

Fig. 6B schematically shows an image representing operations performed by the optical circulator 38. As shown in Fig. 6B, the optical circulator 38 also includes three ports P1 to P3. In the optical circulator 38, an optical signal input from the port P1 is output from the port P2. Further, an optical signal input from the port P2 is output from the port P3.

The port P1 of the optical circulator 38 is optically coupled to the output port of the L-band repeater 34. The port P2 of the optical circulator 38 is optically coupled to the optical fiber 202. The port P3 of the optical circulator 38 is optically coupled to the input port of the C-band repeater 33.

In the above-described second repeater unit 30B, a wavelength-multiplexed optical signal in the C-band output from the C-band wavelength-multiplexing unit 25A is supplied to the port P2 of the optical circulator 38. In the optical circulator 38, the wavelength-multiplexed optical signal in the C-band input from the port P2 is output from the port P3. The wavelength-multiplexed optical signal in the C-band output from the port P3 of the optical circulator 38 is amplified by the C-band repeater 33 and then supplied to the port P1 of the optical circulator 37. In the optical circulator 37, the wavelength-multiplexed optical signal in the C-band input from the port P1 is output from the port P2.

Meanwhile, the wavelength-multiplexed optical signal in the L-band output from the L-band wavelength-multiplexing unit 15B is supplied to the port P1 of the optical circulator 37. In the optical circulator 37, the wavelength-multiplexed optical signal in the L-band input from the port P1 is output from the port P2. The wavelength-multiplexed optical signal in the L-band output from the port P2 of the optical circulator 37 is amplified by the L-band repeater 34 and then supplied to the port P1 of the optical circulator 38. In the optical circulator 38, the wavelength-multiplexed optical signal in the L-band input from the port P1 is output from the port P2.

Next, operations performed by the bidirectional optical transmission system according to this example embodiment will be described in a specific manner.

Firstly, an operation for transmitting an optical signal in the upstream direction (the UP stream) is described.

In the C+L band transmitting/receiving device 10, the C-band wavelength multiplexing unit 15A outputs a wavelength-multiplexed optical signal in the C-band and the L-band wavelength multiplexing unit 15B outputs a wavelength-multiplexed optical signal in the L-band.

The wavelength-multiplexed optical signal in the C-band output from the C-band wavelength-multiplexing unit 15A is supplied to the first repeater 30A through the optical circulator 17 and the optical fiber 201. In the first repeater 30A, the wavelength-multiplexed optical signal in the C-band is supplied to the C-band repeater 31 through the optical circulator 35. The wavelength-multiplexed optical signal in the C-band is amplified by the C-band repeater 31 and then supplied from the optical circulator 36 to the optical fiber 202.

The wavelength-multiplexed optical signal in the C-band is supplied to the C+L band transmitting/receiving device 20 through the optical fiber 202. In the C+L band transmitting/receiving device 20, the wavelength-multiplexed optical signal in the C-band is supplied to the C-band wavelength separating unit 26A through the optical circulator 27.

Meanwhile, the wavelength-multiplexed optical signal in the L-band output from the L-band wavelength-multiplexing unit 15B is supplied to the second repeater 30B through the optical circulator 18 and the optical fiber 203. In the second repeater 30B, the wavelength-multiplexed optical signal in the L-band is supplied to the L-band repeater 34 through the optical circulator 37. The wavelength-multiplexed optical signal in the L-band is amplified by the L-band repeater 34 and then supplied from the optical circulator 38 to the optical fiber 204.

The wavelength-multiplexed optical signal in the L-band is supplied to the C+L band transmitting/receiving device 20 through the optical fiber 204. In the C+L band transmitting/receiving device 20, the wavelength-multiplexed optical signal in the L-band is supplied to the L-band wavelength separating unit 26B through the optical circulator 28.

Next, an operation for transmitting an optical signal in the downstream direction (the Down stream) is described.

In the C+L band transmitting/receiving device 20, the C-band wavelength multiplexing unit 25A outputs a wavelength-multiplexed optical signal in the C-band and the L-band wavelength multiplexing unit 25B outputs a wavelength-multiplexed optical signal in the L-band.

The wavelength-multiplexed optical signal in the C-band output from the C-band wavelength-multiplexing unit 25A is supplied to the second repeater 30B through the optical circulator 28 and the optical fiber 204. In the second repeater 30B, the wavelength-multiplexed optical signal in the C-band is supplied to the C-band repeater 33 through the optical circulator 38. The wavelength-multiplexed optical signal in the C-band is amplified by the C-band repeater 33 and then supplied from the optical circulator 37 to the optical fiber 203.

The wavelength-multiplexed optical signal in the C-band is supplied to the C+L band transmitting/receiving device 10 through the optical fiber 203. In the C+L band transmitting/receiving device 10, the wavelength-multiplexed optical signal in the C-band is supplied to the C-band wavelength separating unit 16A through the optical circulator 18.

Meanwhile, the wavelength-multiplexed optical signal in the L-band output from the L-band wavelength-multiplexing unit 25B is supplied to the first repeater 30A through the optical circulator 27 and the optical fiber 202. In the first repeater 30A, the wavelength-multiplexed optical signal in the L-band is supplied to the L-band repeater 32 through the optical circulator 36. The wavelength-multiplexed optical signal in the L-band is amplified by the L-band repeater 32 and then supplied from the optical circulator 35 to the optical fiber 201.

The wavelength-multiplexed optical signal in the L-band is supplied to the C+L band transmitting/receiving device 10 through the optical fiber 201. In the C+L band transmitting/receiving device 10, the wavelength-multiplexed optical signal in the L-band is supplied to the L-band wavelength separating unit 16B through the optical circulator 17.

The above-described bidirectional optical transmission system according to this example embodiment provides the following functions and effects. In the following descriptions, a transmission line formed by the optical fibers 201 and 202 and the first repeater 30A is referred to as a first optical transmission line. Further, a transmission line formed by the optical fibers 203 and 204 and the second repeater 30B is referred to as a second optical transmission line.

The C+L band transmitting/receiving device 10 transmits an optical signal in the C-band to the C+L band transmitting/receiving device 20 through the first optical transmission line and transmits an optical signal in the L-band to the C+L band transmitting/receiving device 20 through the second optical transmission line. Meanwhile, the C+L band transmitting/receiving device 20 transmits an optical signal in the L-band to the C+L band transmitting/receiving device 10 through the first optical transmission line and transmits an optical signal in the C-band to the C+L band transmitting/receiving device 10 through the second optical transmission line.

In the first optical transmission line, the optical signal in the C-band is transmitted in the upstream direction and the optical signal in the L-band is transmitted in the downstream direction. According to the configuration in which an optical signal in the C-band and an optical signal in the L-band are transmitted in opposite directions as described above, the optical signal in the C-band and the optical signal in the L-band can be separated from each other by using the optical circulators 35 and 36 without using the C/L demultiplexing filter. Further, since only optical signals in the C-band are supplied to the C-band repeater 31, there is no need to cut off optical signals in the L-band in the upstream transmission line on the C-band repeater 31 side. Further, since only optical signals in the L-band are supplied to the L-band repeater 32, there is no need to cut off optical signals in the C-band in the downstream transmission line on the L-band repeater 32 side. Therefore, since there is no need to secure a guard band, the problem that the wavelength band of the main signal is reduced due to the guard band does not occur. Therefore, according to the bidirectional optical transmission system in accordance with this example embodiment, the transmission capacity can be expanded as compared to that in the bidirectional optical transmission system shown in Fig. 1.

In addition, an optical signal in the C-band amplified by the C-band repeater 31 and an optical signal in the L-band amplified by the L-band repeater 32 are transmitted in directions opposite to each other, and these optical signals are not multiplexed. According to the above-described configuration, the coherent crosstalk, which is one of the problems in the bidirectional optical transmission system shown in Fig. 1, does not occur. Therefore, according to the bidirectional optical transmission system in accordance with this example embodiment, the deterioration in the transmission characteristic can be alleviated as compared to the bidirectional optical transmission system shown in Fig. 1.

In the bidirectional optical transmission system according to this example embodiment, each of the optical circulators 17, 18, 27, 28 and 35-38 can be referred to as an optical coupler. The C+L band transmitting/receiving devices 10 and 20 can be referred to as first and second transmitting/receiving devices, respectively. The transmission line formed by the optical fibers 201 and 202 and the first repeater 30A may be referred to as a first optical transmission line. Further, the transmission line formed by the optical fibers 203 and 204 and the second repeater 30B may be referred to as a second optical transmission line.

In the first optical transmission line, the C-band repeater 31 may be referred to as a first optical amplifier and the transmission line including this C-band repeater 31 may be referred to as a first branch transmission line. Further, the L-band repeater 32 may be referred to as a second optical amplifier and the transmission line including this L-band repeater 32 may be referred to as a second branch transmission line.

In the second optical transmission line, the C-band repeater 33 may be referred to as a third optical amplifier the transmission line including this C-band repeater 31 may be referred to as a third branch transmission line. Further, the L-band repeater 34 may be referred to as a fourth optical amplifier and the transmission line including this L-band repeater 32 may be referred to as a fourth branch transmission line.

### (Second Embodiment)

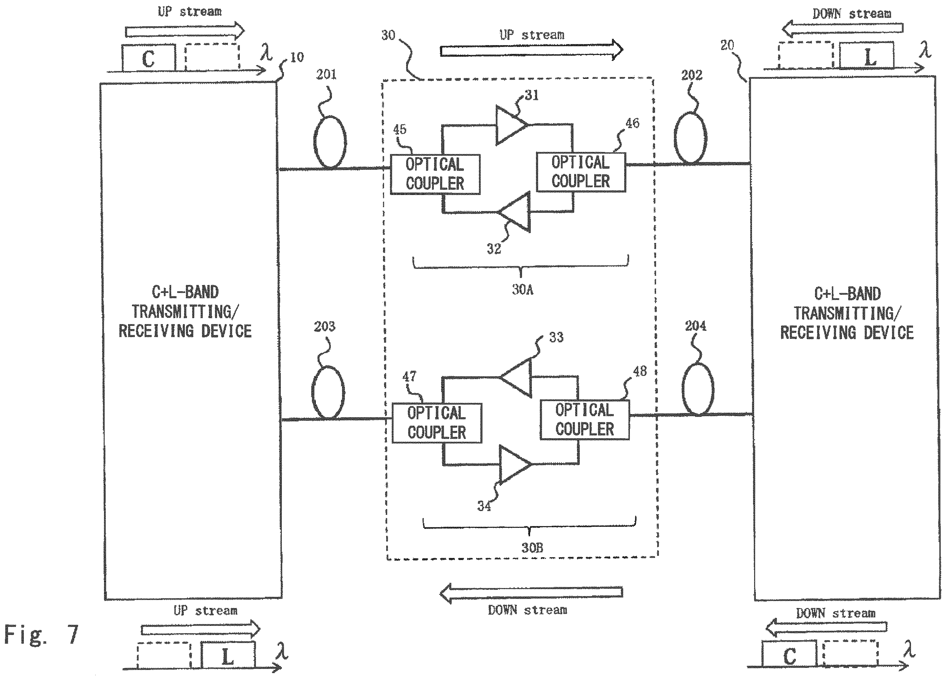

Fig. 7 is a block diagram showing a configuration of a bidirectional optical transmission system according to a second example embodiment of the present invention.

The bidirectional optical transmission system shown in Fig. 7 has a configuration similar to that of the bidirectional optical transmission system according to the first example embodiment, except that it includes optical couplers 45 to 48 in place of the optical circulators 35 to 38. Note that only parts of the configuration different from those of the first example embodiment are described while omitting descriptions of the same parts thereof.

Each of the optical couplers 45 to 48 includes three ports P1 to P3.

In the optical coupler 45, the port P1 is optically coupled to the output port of the L-band repeater 32 and the port P2 is optically coupled to the optical fiber 201. Further, the port P3 is optically coupled to the input port of the C-band repeater 31. The optical coupler 45 supplies a wavelength-multiplexed signal in the C-band output from the C+L band transmitting/receiving device 10 to the C-band repeater 31 and supplies a wavelength-multiplexed signal in the L-band output from the L-band repeater 32 to the C+L band transmitting/receiving device 10.

In the optical coupler 46, the port P1 is optically coupled to the output port of the C-band repeater 31 and the port P2 is optically coupled to the optical fiber 202. Further, the port P3 is optically coupled to the input port of the L-band repeater 32. The optical coupler 46 supplies a wavelength-multiplexed signal in the L-band output from the C+L band transmitting/receiving device 20 to the L-band repeater 32 and supplies a wavelength-multiplexed signal in the C-band output from the C-band repeater 31 to the C+L band transmitting/receiving device 10.

In the optical coupler 47, the port PI is optically coupled to the input port of the C-band repeater 33 and the port P2 is optically coupled to the optical fiber 203. Further, the port P3 is optically coupled to the input port of the L-band repeater 34. The optical coupler 47 supplies a wavelength-multiplexed signal in the L-band output from the C+L band transmitting/receiving device 10 to the L-band repeater 34 and supplies a wavelength-multiplexed signal in the C-band output from the C-band repeater 33 to the C+L band transmitting/receiving device 10.

In the optical coupler 48, the port P1 is optically coupled to the input port of the C-band repeater 33 and the port P2 is optically coupled to the optical fiber 204. Further, the port P3 is optically coupled to the output port of the L-band repeater 34. The optical coupler 48 supplies a wavelength-multiplexed signal in the C-band output from the C+L band transmitting/receiving device 20 to the C-band repeater 33 and supplies a wavelength-multiplexed signal in the L-band output from the L-band repeater 34 to the C+L band transmitting/receiving device 20.

Couplers capable of multiplexing or demultiplexing an optical signal in the C-band and an optical signal in the L-band, for example, directional couplers such as 3dB couplers, can be used as the optical couplers 45 to 48. In this case, the optical couplers 45 to 48 may be formed by C/L demultiplexing filters, but there is no need to secure a guard band. As for the C/L demultiplexing filter, for example, those using an AWG (Arrayed Waveguide Grating) element or those using a multi-layer interference film made of a semiconductor material having a periodic structure in which a refractive index changes in a continuous and periodic manner may be used.

The bidirectional optical transmission system according to this example embodiment also provides functions and effects similar to those in the first example embodiment.

In the bidirectional optical transmission system according to this example embodiment, the C+L band transmitting/receiving devices 10 and 20 may also be referred to as first and second transmitting/receiving devices, respectively. The transmission line formed by the optical fibers 201 and 202 and the first repeater 30A may be referred to as a first optical transmission line. Further, the transmission line formed by the optical fibers 203 and 204 and the second repeater 30B may be referred to as a second optical transmission line.

In the first optical transmission line, the C-band repeater 31 may be referred to as a first optical amplifier and the transmission line including this C-band repeater 31 may be referred to as a first branch transmission line. Further, the L-band repeater 32 may be referred to as a second optical amplifier and the transmission line including this L-band repeater 32 may be referred to as a second branch transmission line.

In the second optical transmission line, the C-band repeater 33 may be referred to as a third optical amplifier the transmission line including this C-band repeater 31 may be referred to as a third branch transmission line. Further, the L-band repeater 34 may be referred to as a fourth optical amplifier and the transmission line including this L-band repeater 32 may be referred to as a fourth branch transmission line.

The above-described bidirectional optical transmission systems according to the respective example embodiments are merely examples of the present disclosure. Further, modifications and improvements that can be understood by those skilled in the art can be made to their configuration and operations without departing from the scope and spirit of the invention.

For example, an optical submarine transmission system is required to be used for a long period of time, i.e., 25 years or longer. However, losses of optical signals increase due to cable repairs and aging deterioration. As a result, spectrum deviations occur in some cases. For example, a spectrum fluctuation in which a gain on the short wave side of the wavelength region of the main signal increases due to increased losses. As a result, the flat gain characteristic may deteriorate.

In the bidirectional optical transmission system according to the first or second example embodiment, in order to reduce the aforementioned spectrum fluctuation, dummy light may be inserted on the short wave side of the C-band optical signal or the L-band optical signal, or each of the C-band optical signal and the L-band optical signal in the C+L band transmitting/receiving devices 10 and 20.

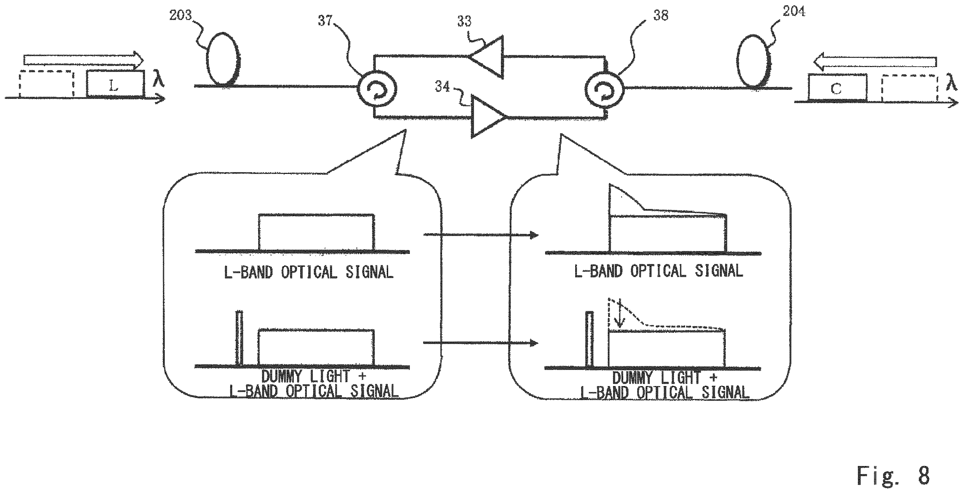

Fig. 8 shows an example of an L-band optical signal in which dummy light is inserted. This example corresponds to the bidirectional optical transmission system according to the first example embodiment. In the C+L band transmitting/receiving device 10, the L-band wavelength multiplexing unit 15B outputs an L-band optical signal in which dummy light is inserted on the short wave side thereof. In Fig. 8, an L-band optical signal with no dummy light inserted therein is shown in an upper part and an L-band optical signal with dummy light inserted therein is shown in a lower part.

A gain on the short wave side of the L-band optical signal (with no dummy light) output from the L-band repeater 34 increases and hence the flat gain characteristic deteriorates. By inserting dummy light on the short wave side outside the L-band, fluctuations on the short wave side thereof can be suppressed.

A C-band optical signal propagating in the upstream direction and an L-band optical signal propagating in the downstream direction are separately supplied to the C-band repeater 31 and the L-band repeater 32, respectively. A C-band optical signal propagating in the downstream direction and an L-band optical signal propagating in the upstream direction are separately supplied to the C-band repeater 33 and the L-band repeater 34, respectively. Since optical signals supplied to respective repeaters are separated from each other as described above, it is possible to easily insert dummy light for reducing a spectrum deviation into each of the C-band wavelength multiplexing unit 15A, the L-band wavelength multiplexing unit 15B, the C-band wavelength multiplexing unit 25A, and the L-band wavelength multiplexing unit 25B.

The above-described insertion of dummy light can be applied to the second example embodiment in a similar manner.

Further, in the bidirectional optical transmission systems according to the respective example embodiments, the number of C+L band repeaters 30 is not limited to one. A plurality of C+L band repeaters 30 may be disposed between the C+L band transmitting/receiving devices 10 and 20 through optical fibers.

This application is based upon and claims the benefit of priority from Japanese patent application No. 2017-082077, filed on April 18, 2017, the disclosure of which is incorporated herein in its entirety by reference.

### Reference Signs List

- 10, 20: C+L BAND TRANSMITTING/RECEIVING DEVICE
- 30: C+L BAND REPEATER
- 30A: FIRST REPEATER
- 30B: SECOND REPEATER

## Claims

1. A bidirectional optical transmission system comprising:
a first optical transmission line comprising a first repeater;
a second optical transmission line comprising a second repeater; and
first and second transmitting/receiving devices connected to each other through the first and second optical transmission lines so that they can communicate with each other, each of first and second transmitting/receiving devices being configured to transmit and receive an optical signal in a first band and an optical signal in a second band different from the first band; wherein
the first transmitting/receiving device transmits the optical signal in the first band to the first optical transmission line and transmits the optical signal in the second band to the second optical transmission line,
the second transmitting/receiving device transmits the optical signal in the first band to the second optical transmission line and transmits the optical signal in the second band to the first optical transmission line,
the first repeater separates the optical signal in the first band and the optical signal in the second band bidirectionally propagating through the first optical transmission line from each other, and separately amplifies the separated optical signals, and
the second repeater separates the optical signal in the first band and the optical signal in the second band bidirectionally propagating through the second optical transmission line from each other, and separately amplifies the separated optical signals.

2. The bidirectional optical transmission system according to Claim 1, wherein
the first repeater comprises:
a first branch transmission line comprising a first optical amplifier in which the optical signal in the first band is transmitted in a first direction, the first direction being a direction from the first transmitting/receiving device toward the second transmitting/receiving device; and
a second branch transmission line comprising a second optical amplifier in which the optical signal in the second band is transmitted in a second direction, the second direction being a direction from the second transmitting/receiving device toward the first transmitting/receiving device,
the second repeater comprises:
a third branch transmission line comprising a third optical amplifier in which the optical signal in the first band is transmitted in the second direction; and
a fourth branch transmission line comprising a fourth optical amplifier in which the optical signal in the second band is transmitted in the first direction.

3. The bidirectional optical transmission system according to Claim 2, wherein
the first repeater comprises first and second optical couplers, each of the first and second optical couplers comprising first to third ports and being configured to output an optical signal input from the first port from the second port and output an optical signal input from the second port from the third port,
the second repeater comprises third and fourth optical couplers, each of the third and fourth optical couplers comprising first to third ports and being configured to output an optical signal input from the first port from the second port and output an optical signal input from the second port from the third port,
one end of the first branch transmission line is optically coupled to the third port of the first optical coupler and the other end of the first branch transmission line is optically coupled to the first port of the second optical coupler,
one end of the second branch transmission line is optically coupled to the first port of the first optical coupler and the other end of the second branch transmission line is optically coupled to the third port of the second optical coupler,
one end of the third branch transmission line is optically coupled to the first port of the third optical coupler and the other end of the third branch transmission line is optically coupled to the third port of the fourth optical coupler,
one end of the fourth branch transmission line is optically coupled to the third port of the third optical coupler and the other end of the fourth branch transmission line is optically coupled to the first port of the fourth optical coupler,
the optical signal in the first band transmitted from the first transmitting/receiving device is supplied to the second port of the first optical coupler,
the optical signal in the second band transmitted from the first transmitting/receiving device is supplied to the second port of the third optical coupler,
the optical signal in the first band transmitted from the second transmitting/receiving device is supplied to the second port of the second optical coupler, and
the optical signal in the second band transmitted from the second transmitting/receiving device is supplied to the second port of the fourth optical coupler.

4. The bidirectional optical transmission system according to Claim 3, wherein each of the first to fourth optical couplers is formed by an optical circulator.

5. The bidirectional optical transmission system according to Claim 3, wherein each of the first to fourth optical couplers is formed by a demultiplexing filter configured to separate the first and second bands from each other.

6. The bidirectional optical transmission system according to any one of Claims 1 to 5, wherein each of the first and second transmitting/receiving devices inserts, into at least one of the optical signal in the first band and the optical signal in the second band, dummy light on a short wave side of that band.

7. A bidirectional optical transmission method comprising transmitting an optical signal in a first band and an optical signal in a second band different from the first band in both a first direction and a second direction opposite to the first direction by using a first optical transmission line comprising a first repeater and a second optical transmission line comprising a second repeater, the bidirectional optical transmission method further comprising:
in the first direction, transmitting the optical signal in the first band to the first optical transmission line, transmitting the optical signal in the second band to the second optical transmission line, and in the first repeater, separating the optical signal in the first band and the optical signal in the second band bidirectionally propagating through the first optical transmission line from each other and separately amplifying the separated optical signals; and
in the second direction, transmitting the optical signal in the first band to the second optical transmission line, transmitting the optical signal in the second band to the first optical transmission line, and in the second repeater, separating the optical signal in the first band and the optical signal in the second band bidirectionally propagating through the second optical transmission line from each other and separately amplifying the separated optical signals.
